# EUROPEAN PATENT SPECIFICATION

(11) **EP 3 361 340 B1**
(45) Date of publication and mention of the grant of the patent: **30.10.2019**
(21) Application number: 18154798.5
(22) Date of filing: 02.02.2018
(51) Int. Cl.: G05B 19/418

(54) **CUTTING SYSTEM**
SCHNEIDSYSTEM
SYSTÈME DE COUPE

(30) Priority: 02.02.2017 JP 2017017539
(43) Date of publication of application: 15.08.2018
(73) Proprietor: Roland DG Corporation, Shizuoka 431-2103 (JP)
(72) Inventor: KANJA, Tetsuya, Hamamatsu-shi, Shizuoka 431-2103 (JP); OGAWA, Tamaki, Hamamatsu-shi, Shizuoka 431-2103 (JP)
(74) Representative: Grünecker Patent- und Rechtsanwälte PartG mbB

(56) References cited:
- US-A- 5 569 003
- US-A1- 2009 198 365

## Description

### CROSS-REFERENCE TO RELATED APPLICATIONS

This application claims priority to Japanese Patent Application No. 2017-017539 filed in Japan on February 2, 2017.

### BACKGROUND OF THE INVENTION

### 1. Field of the Invention

The present invention relates to cutting systems.

### 2. Description of the Related Art

A cutting apparatus to cut a workpiece made of a ceramic material or a resin material, for example, into a desired shape is known in the related art. Examples of such a cutting apparatus include an automatic workpiece changer disclosed in JP 5-16051 A. The automatic workpiece changer contains a plurality of workpieces.

The automatic workpiece changer disclosed in JP 5-16051 A includes: a holder capable of holding a plurality of workpieces; a cutter to cut each workpiece in a machining area; a conveyor to convey each workpiece between the holder and the machining area; and a controller. Each workpiece is mounted on an associated adapter. Each adapter is provided with a data storage storing a machining program number. A path through which each workpiece is to be conveyed by the conveyor is provided with a data reader to read the machining program number stored in each data storage. This path will hereinafter be referred to as a "conveyance path". The controller stores machining programs each associated with one of the machining program numbers. The controller controls the cutter in accordance with the machining programs associated with the machining program numbers read by the data reader.

The automatic workpiece changer disclosed in JP 5-16051 A is configured such that while each workpiece is conveyed by the conveyor, the data reader reads the machining program number stored in the data storage of the adapter on which the workpiece is mounted. Each workpiece is automatically cut in the machining area in accordance with the machining program associated with the machining program number read by the data reader. This enables the automatic workpiece changer to automatically cut a plurality of workpieces.

Although a user of the automatic workpiece changer disclosed in JP 5-16051 A wishes to cut each workpiece in accordance with the machining program associated with the machining program number stored in the data storage of the adapter on which the workpiece is mounted, the workpiece to be cut may not be held in the holder. In such a case, cutting may unfortunately end during the course of execution of the machining program.

A further apparatus of related background art is disclosed in US 5 569 003 A.

### SUMMARY OF THE INVENTION

Accordingly, embodiments of the present invention provide a cutting system to suitably cut a plurality of workpieces in accordance with a machining program that is executed to automatically cut the workpieces.

An embodiment of the present invention provides a cutting system including a workpiece container, a cutting apparatus, a workpiece conveyor, and a controller. The workpiece container includes a holder configured to hold a plurality of workpieces. The cutting apparatus is configured to cut the workpieces in accordance with a machining program. The workpiece conveyor is configured to convey one of the plurality of workpieces held in the holder to the cutting apparatus. The controller is configured or programmed to control the cutting apparatus and the workpiece conveyor. Each of the workpieces is provided with a storage storing an identifier that identifies the workpiece. The workpiece conveyor includes a reader configured to read the identifiers stored in the storages. The controller includes a storage processor, a reading processor, an identifier determination processor, a cutting control processor, and an error notification processor. The storage processor stores the machining program and a target list. The target list is a list of target identifiers that are identifiers designated by the machining program. The reading processor is configured to cause the reader to read, before the workpieces are cut by the cutting apparatus, the identifier stored in the storage of each of the workpieces held in the holder. The identifier determination processor is configured to determine whether the target identifiers in the target list are included in the identifiers read by the reading processor. The cutting control processor is configured to, upon determination by the identifier determination processor that the target identifiers in the target list are included in the identifiers read by the reading processor, control the workpiece conveyor and the cutting apparatus so as to cut the workpiece provided with the storage storing the identifier identical to an associated one of the target identifiers. The error notification processor is configured to provide an error notification upon determination by the identifier determination processor that at least one of the target identifiers in the target list is not included in the identifiers read by the reading processor.

Suppose that a machining program is executed although a workpiece having an identifier identical to an associated target identifier designated by the machining program to be executed by a cutting system is not held in a holder. In such a case, a cutting apparatus will recognize in the course of cutting that the target workpiece is not held in the holder, so that cutting performed by the cutting apparatus will be interrupted in progress. The cutting system according to the present embodiment, however, is configured such that the error notification processor provides, before the machining program is executed, an error notification when the workpiece having the identifier identical to the associated target identifier designated by the machining program to be executed is not held in the holder. Thus, the cutting apparatus does not start cutting the workpieces in this case. This prevents interruption of in-progress cutting resulting from the situation where the target workpiece is not held in the holder. Consequently, the cutting ting system according to the present embodiment suitably performs cutting in accordance with the machining program.

Various embodiments of the present invention provide a cutting system to suitably cut a plurality of workpieces in accordance with a machining program that is executed to automatically cut the workpieces.

The above and other elements, features, steps, characteristics and advantages of the present invention will become more apparent from the following detailed description of the preferred embodiments with reference to the attached drawings.

### BRIEF DESCRIPTION OF THE DRAWINGS

FIG. 1 is a perspective view of a cutting system according to an embodiment of the present invention.
FIG. 2 is a plan view of a workpiece to which an adapter is attached.
FIG. 3 is a perspective view of the cutting system, with a door of a workpiece container opened.
FIG. 4 is a front view of a holder, schematically illustrating the positional relationship between the holder and a first conveying mechanism.
FIG. 5 is a plan view of a workpiece conveyor, with the workpiece grasped by a grasper.
FIG. 6 is a plan view of the workpiece conveyor, with the workpiece not grasped by the grasper.
FIG. 7 is a front view of a cutting apparatus.
FIG. 8 is a perspective view of a tool magazine.
FIG. 9 is a perspective view of a rotary supporting member and a clamp.
FIG. 10 is a block diagram of the cutting system.
FIG. 11 is a flow chart illustrating a procedure for determining whether the workpiece to be cut in accordance with a machining program is contained in the workpiece container.

### DETAILED DESCRIPTION OF THE PREFERRED EMBODIMENTS

A cutting system 100 according to an embodiment of the present invention will be described below with reference to the drawings. The embodiment described below is naturally not intended to limit the present invention in any way. Components or elements having the same functions are identified by the same reference signs, and description thereof will be simplified or omitted when deemed redundant.

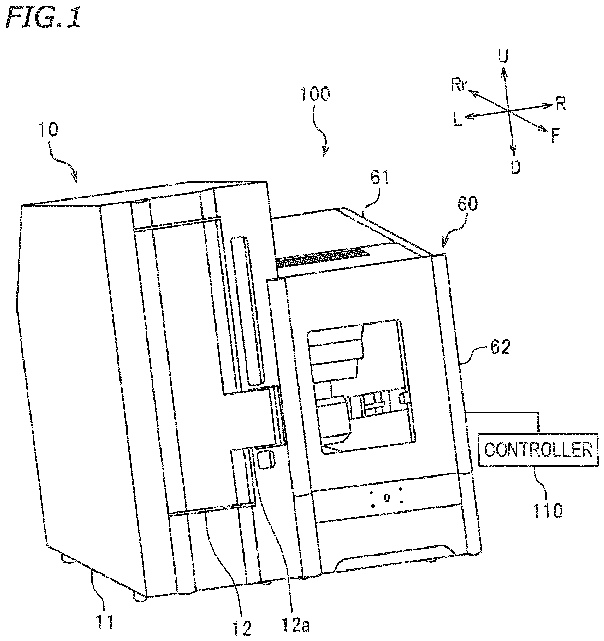

FIG. 1 is a perspective view of the cutting system 100 according to the present embodiment. The following description is based on the assumption that when a user faces the front of the cutting system 100, a direction from the rear of the cutting system 100 toward the user is a forward direction and a direction from the user toward the rear of the cutting system 100 is a rearward direction. The terms "right", "left", "up", and "down" respectively refer to right, left, up, and down with respect to the user facing the front of the cutting system 100. The reference signs F, Rr, R, L, U, and D in the drawings respectively represent front, rear, right, left, up, and down. Assuming that an X axis, a Y axis, and a Z axis are perpendicular to each other, the cutting system 100 according to the present embodiment is disposed on a plane including the X axis and the Y axis. In the present embodiment, the X axis extends in the front-rear direction, the Y axis extends in the right-left direction, and the Z axis extends in the up-down direction. The reference sign θx represents a rotational direction around the X axis. The reference sign θy represents a rotational direction around the Y axis. The reference sign θz represents a rotational direction around the Z axis. These directions are defined merely for the sake of convenience of description and do not limit in any way how the cutting system 100 may be installed. These directions do not limit the present invention in any way.

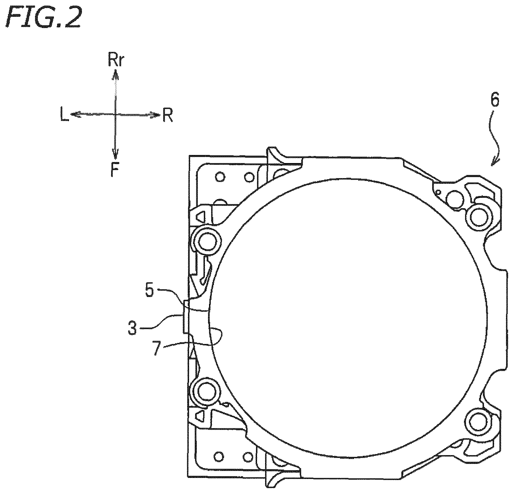

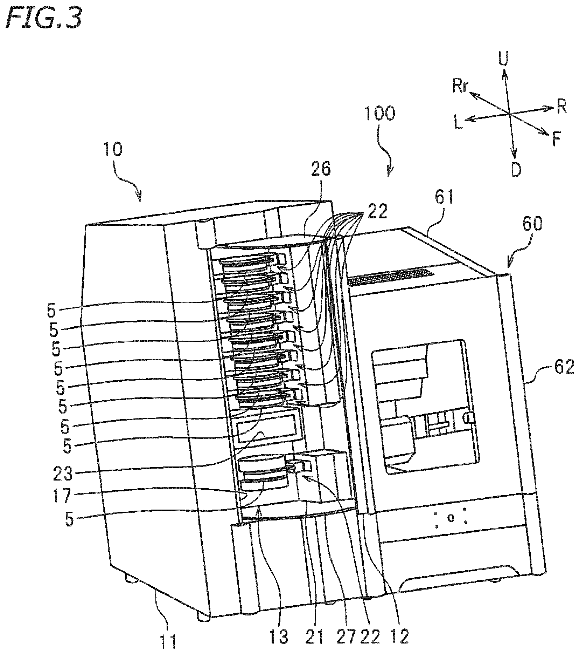

FIG. 2 is a plan view of a workpiece 5 to which an adapter 6 is attached. In the present embodiment, the cutting system 100 is configured to contain a plurality of workpieces 5 (see FIGS. 2 and 3). The cutting system 100 is configured to select one of the workpieces 5 from those contained in the cutting system 100 and cut the workpiece 5 selected. Each workpiece 5 is an object to be cut by the cutting system 100. In one example, the cutting system 100 cuts the workpieces 5 so as to manufacture artificial teeth. Target objects to be manufactured by the cutting system 100, however, are not limited to artificial teeth. As illustrated in FIG. 2, each workpiece 5 according to the present embodiment has a circular shape. Each workpiece 5, however, may have any other shape. In one example, each workpiece 5 may have a rectangular shape. The workpieces 5 are made of any of various materials, such as zirconia, wax, polymethyl methacrylate (PMMA) resin, hybrid resin, polyether ether ketone (PEEK) resin, and gypsum. When zirconia is selected as a material for the workpieces 5, semi-sintered zirconia, for example, is preferably used. A material for the workpieces 5 is not limited to any particular material.

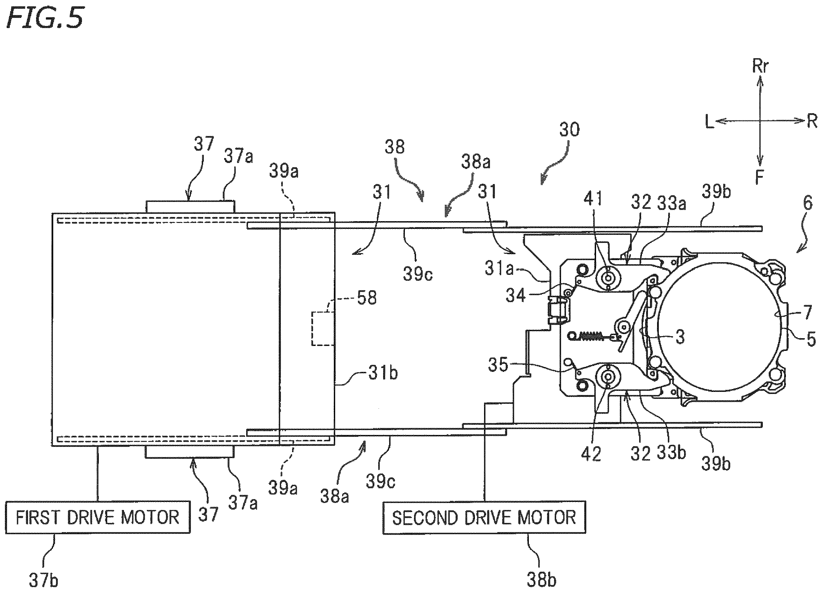

In the present embodiment, each adapter 6 is attached to an associated one of the workpieces 5 as illustrated in FIG. 2. The adapter 6 is grasped by a grasper 32 (see FIG. 5) of a workpiece conveyor 30 (which will be described below) when the cutting system 100 retains the workpiece 5. Each workpiece 5 having the associated adapter 6 attached thereto is contained in a workpiece container 10 (which will be described below) of the cutting system 100 and is to be cut by the cutting system 100. The shape of each adapter 6, for example, is not limited to any particular shape. In the present embodiment, each adapter 6 is provided in its center with an insertion hole 7. Inserting each workpiece 5 into the insertion hole 7 of the associated adapter 6 secures the workpiece 5 to the associated adapter 6. In the following description, the term "workpiece 5" refers to the workpiece 5 having the associated adapter 6 attached thereto. Thus, each workpiece 5 includes the adapter 6 attached thereto.

The present embodiment involves assigning identifiers to the workpieces 5 so as to distinguish each workpiece 5 from the others. The identifiers are used to identify the workpieces 5. The identifiers assigned to the workpieces 5 are different from each other. In one example, the identifiers are numerals or characters, such as machining program numbers. The identifiers, however, are not limited to numerals or characters. In the present embodiment, each adapter 6 attached to the associated workpiece 5 is provided with a storage 3. The storages 3 store the identifiers. In the present embodiment, the identifier stored in each storage 3 is a bar code (e.g., a one-dimensional code). The identifier stored in each storage 3, however, is not limited to a bar code. Each storage 3 may store a two-dimensional code or an IC tag, for example.

As illustrated in FIG. 1, the cutting system 100 according to the present embodiment includes the workpiece container 10, the workpiece conveyor 30 (see FIG. 5), a cutting apparatus 60, and a controller 110. The workpiece container 10, the workpiece conveyor 30, the cutting apparatus 60, and the controller 110 will be described in this order below.

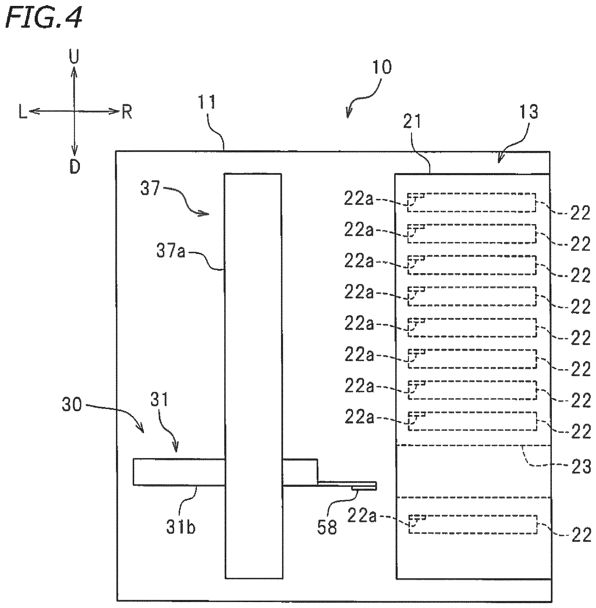

FIG. 3 is a perspective view of the cutting system 100, with a door 12 of the workpiece container 10 opened. As illustrated in FIG. 3, the workpiece container 10 according to the present embodiment contains the workpieces 5. One of the workpieces 5 contained in the workpiece container 10 is selected and conveyed to the cutting apparatus 60 by the workpiece conveyor 30 illustrated in FIG. 4. The workpiece container 10 functions as a "workpiece changer". The structure of the workpiece container 10, for example, is not limited to any particular structure. In the present embodiment, the workpiece container 10 has a box shape. The workpiece container 10 includes a case body 11, the door 12, and a holder 13.

The case body 11 has a box shape. The case body 11 includes an inner space. The holder 13 capable of holding the workpieces 5 is disposed in the inner space of the case body 11. In the present embodiment, the front portion of the case body 11 is provided with an opening 17. The opening 17 provides communication between the inner space of the case body 11 and outside of the case body 11.

The door 12 is provided on the case body 11 such that the door 12 opens and closes the opening 17 at the front portion of the case body 11. In the present embodiment, the door 12 is a plate member. In one example, the door 12 is supported by the case body 11 such that the door 12 is rotatable around its right end. As illustrated in FIG. 1, the door 12 is provided with a support protrusion 12a extending rightward from the right portion of the door 12. The support protrusion 12a is supported by the case body 11. In the present embodiment, the door 12 is rotated around the support protrusion 12a so as to open or close the opening 17 of the case body 11 (see FIGS. 1 and 3). The door 12 may be provided with a lock mechanism to lock movement of the door 12 relative to the case body 11, with the opening 17 opened by the door 12. The door 12 is movable such that the door 12 opens and closes the opening 17 during cutting performed by the cutting apparatus 60. Alternatively, with the opening 17 closed by the door 12, the door 12 may be locked during cutting performed by the cutting apparatus 60.

The holder 13 holds the workpieces 5. In the present embodiment, the holder 13 is provided on the door 12. The holder 13 moves in conjunction with movement of the door 12. With the opening 17 closed by the door 12, the holder 13 is contained in the inner space of the case body 11. The holder 13, however, may be simply disposed in the inner space of the case body 11 without being provided on the door 12. In the present embodiment, the holder 13 includes a holder body 21 and a plurality of sub-holders 22. The holder body 21 has a box shape extending in the up-down direction. In the present embodiment, the upper end of the holder body 21 and the upper end of the door 12 are connected to each other through an upper connecting plate 26. The lower end of the holder body 21 and the lower end of the door 12 are connected to each other through a lower connecting plate 27. In the present embodiment, the holder body 21 is rotated together with the door 12 when the door 12 is rotated around the support protrusion 12a (see FIG. 1).

Each of the sub-holders 22 holds an associated one of the workpieces 5 having the associated adapter 6 (see FIG. 2) attached thereto. The sub-holders 22 are provided on the holder body 21. The sub-holders 22 are disposed one above another in the up-down direction. Each sub-holder 22 includes an inner space. Each workpiece 5 is held in the inner space of the associated sub-holder 22. In one example, the inner peripheral surface of each sub-holder 22 defining the inner space thereof has a shape conforming to the shape of the associated adapter 6. Each of the workpieces 5 is held in an associated one of the sub-holders 22. In the present embodiment, the number of sub-holders 22 is nine. Thus, the number of workpieces 5 that may be held in the holder 13 is nine. The number of sub-holders 22, however, is not limited to any particular number, The locations at which the sub-holders 22 are disposed are not limited to any particular locations. In one example, some of the sub-holders 22 may be disposed side by side in the right-left direction. In the present embodiment, with the opening 17 of the case body 11 closed by the door 12, the inner space of each sub-holder 22 is open leftward. With the opening 17 opened by the door 12, the inner space of each sub-holder 22 is open forward.

FIG. 4 is a front view of the holder 13, schematically illustrating the positional relationship between the holder 13 and a first conveying mechanism 37 of the workpiece conveyor 30. As illustrated in FIG. 4, each sub-holder 22 is provided with a sensor 22a. The sensors 22a are used to determine whether the workpieces 5 are held in the sub-holders 22. The sensors 22a are not limited to any particular type of sensor. In one example, the sensors 22a may each be a microswitch or a photoelectric sensor.

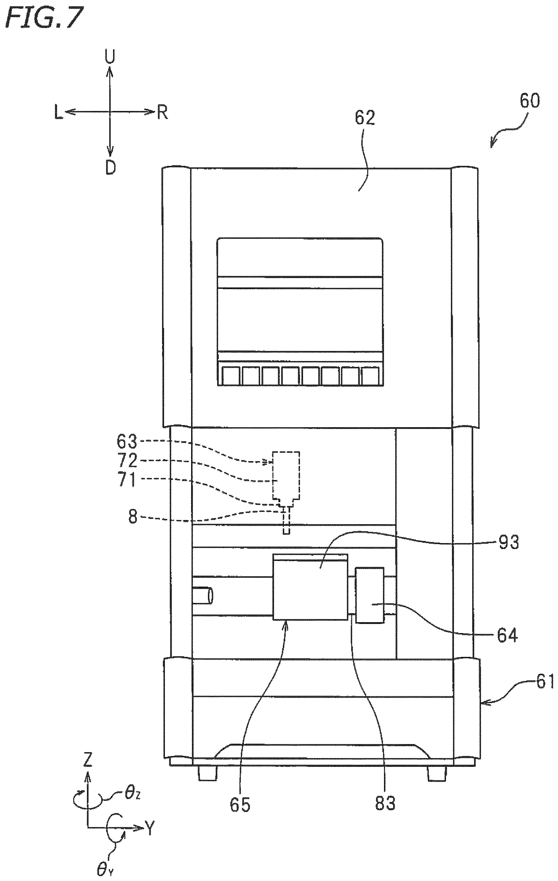

In the present embodiment, a conveyance hole 23 is provided in a portion of the holder body 21 between the sub-holders 22 as illustrated in FIG. 3. When the workpiece 5 held in the associated sub-holder 22 is conveyed to the cutting apparatus 60 by the workpiece conveyor 30, the workpiece 5 passes through the conveyance hole 23. The conveyance hole 23 provides communication between the inner space of the case body 11 and the inner space of a case body 61 (see FIG. 7) of the cutting apparatus 60. The case body 61 will be described below. The shape of the conveyance hole 23 is not limited to any particular shape. In the present embodiment, the conveyance hole 23 has a rectangular shape, for example. The location at which the conveyance hole 23 is provided is not limited to any particular location. In the present embodiment, the conveyance hole 23 is provided in a portion of the holder body 21 located between the lowermost sub-holder 22 and the second lowest sub-holder 22.

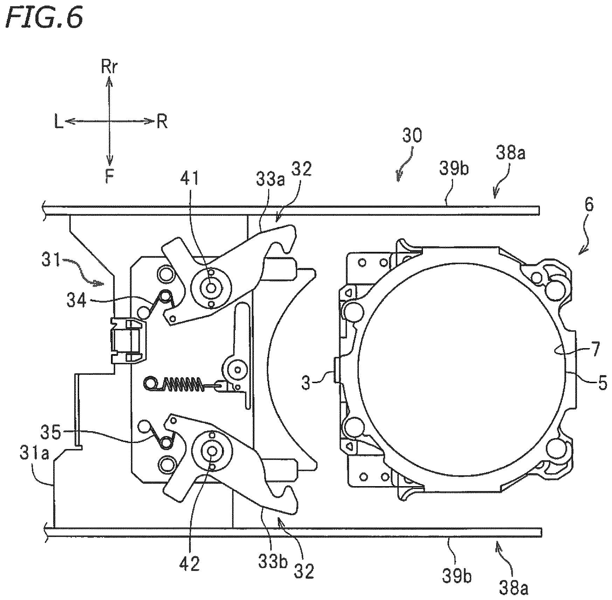

The workpiece conveyor 30 will be described below. FIG. 5 is a plan view of the workpiece conveyor 30, with the workpiece 5 grasped by the grasper 32. FIG. 6 is a plan view of the workpiece conveyor 30, with the workpiece 5 not grasped by the grasper 32. The workpiece conveyor 30 selects one of the workpieces 5 held in the holder 13 of the workpiece container 10 and conveys the selected workpiece 5 to the cutting apparatus 60. In other words, the workpiece conveyor 30 removes, from the holder 13, one of the workpieces 5 held in the sub-holders 22 of the holder 13 and conveys the removed workpiece 5 to the cutting apparatus 60. The workpiece conveyor 30 also conveys the workpiece 5 such that the workpiece 5 is held in the associated sub-holder 22 of the holder 13. As illustrated in FIG. 4, the workpiece conveyor 30 is disposed in the inner space of the case body 11. The structure of the workpiece conveyor 30 is not limited to any particular structure. As illustrated in FIG. 5, the workpiece conveyor 30 according to the present embodiment includes a conveyance body 31, the grasper 32, the first conveying mechanism 37, and a second conveying mechanism 38.

As illustrated in FIG. 4, the conveyance body 31 is disposed in the case body 11. As illustrated in FIG. 5, the grasper 32 grasps the workpiece 5 having the associated adapter 6 attached thereto. In the present embodiment, the grasper 32 includes a first hook 33a, a second hook 33b, a first spring 34, and a second spring 35. The grasper 32 grasps the workpiece 5 by catching the workpiece 5 between the first hook 33a and the second hook 33b. The first hook 33a and the second hook 33b are provided on the conveyance body 31. In the present embodiment, the conveyance body 31 includes a first conveyance body 31a having a plate shape. The first conveyance body 31a is movable in the right-left direction. The first hook 33a and the second hook 33b are disposed on the upper surface of the first conveyance body 31a. The first hook 33a and the second hook 33b are disposed such that the first hook 33a and the second hook 33b face each other in the front-rear direction. In the present embodiment, the first conveyance body 31a is provided with a first shaft 41 and a second shaft 42 that extend upward. The first shaft 41 and the second shaft 42 face each other in the front-rear direction. The first hook 33a is supported by the first shaft 41 and rotatable around the first shaft 41. The second hook 33b is supported by the second shaft 42 and rotatable around the second shaft 42.

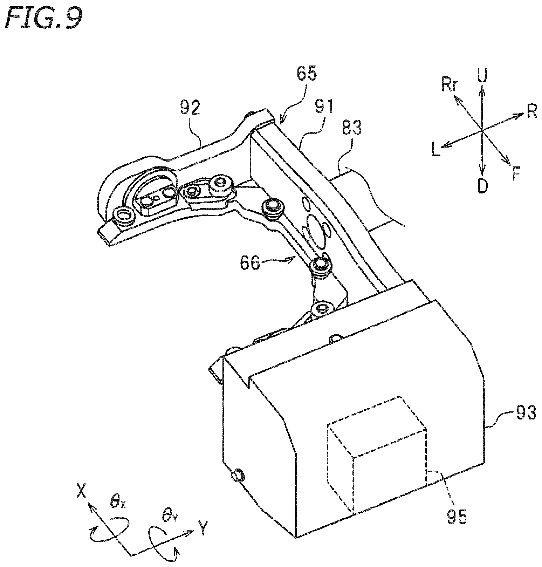

The first spring 34 applies an elastic force to the first hook 33a. In the present embodiment, when the first hook 33a and the second hook 33b grasp the workpiece 5 therebetween, the first spring 34 applies an elastic force to the first hook 33a in a direction in which an end of the first hook 33a (i.e., the right end of the first hook 33a in FIG. 5) moves toward the second hook 33b. The second spring 35 applies an elastic force to the second hook 33b. In the present embodiment, when the first hook 33a and the second hook 33b grasp the workpiece 5 therebetween, the second spring 35 applies an elastic force to the second hook 33b in a direction in which an end of the second hook 33b (i.e., the right end of the second hook 33b in FIG. 5) moves toward the first hook 33a. With the workpiece 5 secured to a clamp 66 (see FIG. 9) and grasped between the first hook 33a and the second hook 33b, pressing the first hook 33a and the second hook 33b to the workpiece 5 (i.e., rightward in FIG. 5) causes the ends of the first hook 33a and the second hook 33b to move outward as illustrated in FIG. 6. The clamp 66 will be described below. In the state illustrated in FIG. 6, the first spring 34 applies no elastic force that causes the first hook 33a to move toward the second hook 33b, and the second spring 35 applies no elastic force that causes the second hook 33b to move toward the first hook 33a. This releases the grasping of the workpiece 5 by the first hook 33a and the second hook 33b. As described above, the grasper 32 according to the present embodiment is configured to grasp the workpiece 5 between the first hook 33a and the second hook 33b using the elastic forces of the first spring 34 and the second spring 35. Alternatively, the grasper 32 may be configured to grasp the workpiece 5 between the first hook 33a and the second hook 33b by electrical control.

As illustrated in FIG. 4, the first conveying mechanism 37 conveys the conveyance body 31 and the grasper 32 (or more specifically, the first hook 33a and the second hook 33b) in the up-down direction inside the inner space of the case body 11 of the workpiece container 10. The up-down direction in the present embodiment corresponds to a "first direction" according to the present invention. The specific structure of the first conveying mechanism 37 is not limited to any particular structure. As illustrated in FIG. 5, the first conveying mechanism 37 includes: a pair of first rails 37a serving as an example of a rail according to the present invention; and a first drive motor 37b serving as an example of a drive motor according to the present invention. The first rails 37a are disposed such that the first rails 37a face each other in the front-rear direction inside the case body 11. As illustrated in FIG. 4, the first rails 37a extend in the up-down direction such that the first rails 37a face the holder 13 of the workpiece container 10 in the right-left direction. As illustrated in FIG. 5, the conveyance body 31 is slidable along the first rails 37a. The conveyance body 31 is disposed between the first rails 37a. The first drive motor 37b serves to move the conveyance body 31 and the grasper 32 in the up-down direction. In the present embodiment, the first drive motor 37b is connected to the conveyance body 31. The first drive motor 37b causes the conveyance body 31 to move along the first rails 37a in the up-down direction so as to move the grasper 32 in the up-down direction.

The second conveying mechanism 38 conveys the workpiece 5 grasped by the grasper 32 to the cutting apparatus 60. In the present embodiment, the second conveying mechanism 38 conveys the first conveyance body 31a and the grasper 32 in the right-left direction. The second conveying mechanism 38 conveys the workpiece 5 to the cutting apparatus 60 through the conveyance hole 23 (see FIG. 3) provided in the holder body 21 of the holder 13. The specific structure of the second conveying mechanism 38 is not limited to any particular structure. As illustrated in FIG. 5, the second conveying mechanism 38 according to the present embodiment includes a pair of second rails 38a and a second drive motor 38b. The second rails 38a are extendable and contractible. The second rails 38a are extendable in the right-left direction. The second rails 38a are disposed such that the second rails 38a face each other in the front-rear direction. In the present embodiment, each of the second rails 38a includes a secured rail 39a, a movable rail 39b, and an intermediate rail 39c. In the present embodiment, the conveyance body 31 includes a second conveyance body 31b having a box shape. The second conveyance body 31b is capable of containing the first conveyance body 31a described above. Each secured rail 39a is secured to the second conveyance body 31b. Each movable rail 39b is provided on the first conveyance body 31a. Each intermediate rail 39c serves to connect the associated secured rail 39a with the associated movable rail 39b. Each intermediate rail 39c is disposed between the associated secured rail 39a and the associated movable rail 39b. Each intermediate rail 39c is slidable along the associated secured rail 39a and the associated movable rail 39b.

The second drive motor 38b causes the first conveyance body 31a of the conveyance body 31 and the grasper 32 (or more specifically, the first hook 33a and the second hook 33b) to move in the right-left direction. In one example, the second drive motor 38b is connected to the first conveyance body 31a. Alternatively, the second drive motor 38b may be connected to either one of the second rails 38a. In the present embodiment, driving the second drive motor 38b results in a change in the distance between each secured rail 39a and the associated movable rail 39b. In one example, the distance between each secured rail 39a and the associated movable rail 39b is increased, so that the first conveyance body 31a on which the movable rails 39b are provided and the workpiece 5 grasped by the grasper 32 are conveyed to the cutting apparatus 60 through the conveyance hole 23. When the distance between each secured rail 39a and the associated movable rail 39b is reduced such that each secured rail 39a is overlapped with the associated movable rail 39b in the front-rear direction, the first conveyance body 31a and the grasper 32 are contained in the second conveyance body 31b.

In the present embodiment, the workpiece conveyor 30 includes a reader 58. The reader 58 reads the identifier stored in the storage 3 (see FIG. 2) of each adapter 6 attached to the associated workpiece 5. In the present embodiment, the reader 58 is a noncontact reader. The reader 58 passes through a region adjacent to the storages 3 so as to read the identifiers stored in the storages 3. Alternatively, the reader 58 may be configured to come into contact with the storages 3 so as to read the identifiers stored in the storages 3. In other words, the reader 58 may be a "contact type" reader. As illustrated in FIG. 4, the reader 58 is provided on the conveyance body 31. Specifically, the reader 58 is provided on the second conveyance body 31b. Alternatively, the reader 58 may be provided on the first conveyance body 31a. In the present embodiment, with the first conveyance body 31a contained in the second conveyance body 31b, the conveyance body 31 moves in the up-down direction along the first rails 37a. This enables the reader 58 to read the identifiers stored in the storages 3 of the workpieces 5 held in the sub-holders 22.

The cutting apparatus 60 will be described below. As illustrated in FIG. 1, the cutting apparatus 60 according to the present embodiment cuts the workpiece 5 conveyed to the cutting apparatus 60 by the workpiece conveyor 30. In the present embodiment, the cutting apparatus 60 is integral with the workpiece container 10. Alternatively, the cutting apparatus 60 may be separate from the workpiece container 10. The cutting apparatus 60 has a box shape. A portion of the cutting apparatus 60 is in communication with the workpiece container 10. The structure of the cutting apparatus 60 is not limited to any particular structure.

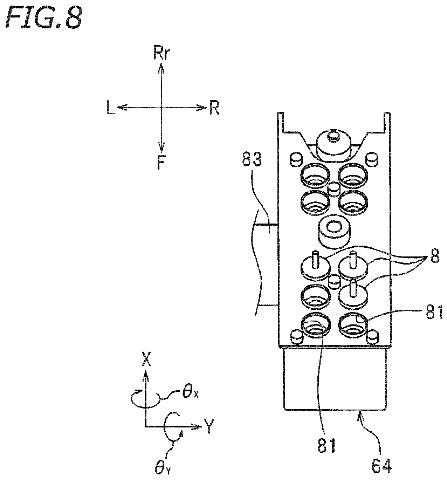

FIG. 7 is a front view of the cutting apparatus 60. FIG. 7 illustrates the cutting apparatus 60, with its cover 62 opened. In FIG. 7, the workpiece container 10 is not illustrated. FIG. 8 is a perspective view of a tool magazine 64. FIG. 9 is a perspective view of a rotary supporting member 65 and the clamp 66. As illustrated in FIG. 7, the cutting apparatus 60 according to the present embodiment includes the case body 61, the cover 62, a spindle 63, the tool magazine 64, the rotary supporting member 65, and the clamp 66 (see FIG. 9). The case body 61 has a box shape. The case body 61 includes an inner space. The case body 61 is provided at its front portion with an opening. The cover 62 is supported by the case body 61 such that the cover 62 opens and closes the opening of the case body 61.

The spindle 63 rotates a machining tool 8 so as to cut the workpiece 5 using the machining tool 8. The spindle 63 includes a tool grasper 71 and a rotary portion 72. The tool grasper 71 grasps the upper end of the machining tool 8. In the present embodiment, the rotary portion 72 is provided on the upper end of the tool grasper 71.

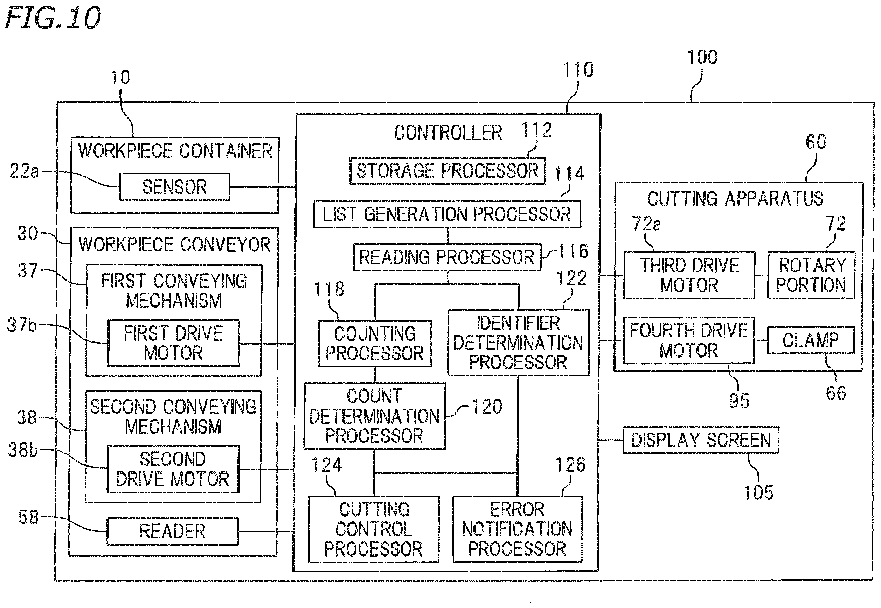

The rotary portion 72 rotates the machining tool 8 grasped by the tool grasper 71. The rotary portion 72 extends in the up-down direction. In the present embodiment, the rotary portion 72 is connected with a third drive motor 72a (see FIG. 10). Driving the third drive motor 72a enables the rotary portion 72 to rotate in the rotational direction θz around the Z axis. The rotation of the rotary portion 72 causes the machining tool 8 grasped by the tool grasper 71 to rotate in the rotational direction θz around the Z axis. The rotary portion 72 is configured to be moved in the right-left direction and the up-down direction by a first drive member (not illustrated).

As illustrated in FIG. 8, the tool magazine 64 is capable of holding a plurality of machining tools 8. In the present embodiment, the tool magazine 64 has a box shape. The upper surface of the tool magazine 64 is provided with a plurality of holes 81 to hold the machining tools 8. Each machining tool 8 is inserted into an associated one of the holes 81 such that the upper portion of each machining tool 8 is exposed. Replacement of the machining tool 8 involves: returning the machining tool 8 grasped by the tool grasper 71 to the associated hole 81; moving the tool grasper 71 and the rotary portion 72 to a position above the machining tool 8 to be used next; and causing the tool grasper 71 to grasp the upper end of the machining tool 8 located below the tool grasper 71.

The tool magazine 64 is provided with a rotation shaft 83. The rotation shaft 83 supports the rotary supporting member 65 (see FIG. 9) such that the rotary supporting member 65 is rotatable. The rotation shaft 83 extends in the right-left direction. As illustrated in FIG. 9, the rotation shaft 83 is coupled to the rotary supporting member 65. Although not illustrated, the tool magazine 64 is provided with a second drive member. The rotation shaft 83 is rotatable in the rotational direction θy around the Y axis by the second drive member. The rotation of the rotation shaft 83 in the rotational direction θy around the Y axis causes the rotary supporting member 65 to rotate in the rotational direction θy around the Y axis.

The rotary supporting member 65 supports the clamp 66 such that the clamp 66 is rotatable. The rotary supporting member 65 is substantially U-shaped in a plan view. The rotary supporting member 65 is coupled to the rotation shaft 83. The rotary supporting member 65 includes: a first portion 91 extending in the front-rear direction; a second portion 92 extending leftward from the rear end of the first portion 91; and a third portion 93 extending leftward from the front end of the first portion 91. The clamp 66 is rotatably supported by the second portion 92 and the third portion 93. The third portion 93 is provided with a fourth drive motor 95 to rotate the clamp 66 in the rotational direction θx around the X axis.

The clamp 66 is a member to retain the workpiece 5 to be cut. In one example, the clamp 66 has a shape conforming to the shape of a portion of each adapter 6 (see FIG. 2) attached to the associated workpiece 5. The clamp 66 is substantially C-shaped in the plan view. The clamp 66 retains the workpiece 5 that has been conveyed to the cutting apparatus 60 by the workpiece conveyor 30. In the present embodiment, the cutting apparatus 60 cuts the workpiece 5 retained by the clamp 66.

The controller 110 will be described below. FIG. 10 is a block diagram of the cutting system 100. The controller 110 controls conveyance of the workpieces 5 and cutting performed on the workpieces 5. The controller 110 includes a microcomputer. The controller 110 is provided in the cutting system 100. In one example, the controller 110 may be provided in the case body 11 of the workpiece container 10 or may be provided in the case body 61 of the cutting apparatus 60. Some of the functions of the controller 110 may be implemented by a general-purpose computer, such as a personal computer. The controller 110 includes a central processing unit (CPU), a read-only memory (ROM) storing, for example, a program to be executed by the CPU, and a random-access memory (RAM). In the present embodiment, the controller 110 controls conveyance of the workpieces 5 and cutting performed on the workpieces 5 using the program stored in the microcomputer.

As illustrated in FIG. 10, the controller 110 according to the present embodiment is electrically connected to the workpiece container 10, the workpiece conveyor 30, and the cutting apparatus 60. Specifically, the controller 110 is electrically connected to the sensors 22a of the workpiece container 10. When the workpiece 5 is held in the associated sub-holder 22, the controller 110 receives, from the sensor 22a, a signal indicative of this condition. When the workpiece 5 is removed from the associated sub-holder 22, the controller 110 receives, from the sensor 22a, a signal indicative of this removal.

The controller 110 is electrically connected to the following components of the workpiece conveyor 30: the first drive motor 37b of the first conveying mechanism 37; the second drive motor 38b of the second conveying mechanism 38; and the reader 58. The controller 110 controls driving of the first drive motor 37b so as to control movement of the conveyance body 31 and the grasper 32 in the up-down direction. The controller 110 controls driving of the second drive motor 38b so as to control movement of the conveyance body 31 and the grasper 32 in the right-left direction. When the identifier stored in the storage 3 of each workpiece 5 held in the associated sub-holder 22 is read by the reader 58, the controller 110 receives information on the identifier from the reader 58.

The controller 110 is electrically connected to the third drive motor 72a and the fourth drive motor 95 of the cutting apparatus 60. The controller 110 controls driving of the third drive motor 72a so as to control rotation of the rotary portion 72 of the spindle 63. Although not illustrated, the controller 110 is able to exercise control to cause the rotary portion 72 to move in the right-left direction and the up-down direction. The controller 110 controls driving of the fourth drive motor 95 so as to control rotation of the clamp 66 in the rotational direction θx around the X axis. Although not illustrated, the controller 110 is able to exercise control to cause the rotation shaft 83 (see FIG. 9) to rotate in the rotational direction θy around the Y axis.

In the present embodiment, the controller 110 includes a storage processor 112, a list generation processor 114, a reading processor 116, a counting processor 118, a count determination processor 120, an identifier determination processor 122, a cutting control processor 124, and an error notification processor 126. The functions of these processors are implemented by the program stored in the ROM. The program is read from a storage medium, such as a CD or a DVD, for example. Alternatively, the program may be downloaded through the Internet. The functions of the processors of the controller 110 may be implemented by circuit(s), for example. The specific functions of these processors will be described below.

In the present embodiment, the cutting system 100 includes a display screen 105. The display screen 105 presents information on the cutting system 100 and information on cutting, for example. The display screen 105 is not limited to any particular type of display screen. In one example, the display screen 105 is a panel disposed on the case body 11 of the workpiece container 10 or the case body 61 of the cutting apparatus 60. Alternatively, the display screen 105 may be a display, such as a liquid crystal display, separate from the workpiece container 10 and the cutting apparatus 60.

The cutting system 100 automatically cuts the workpieces 5 using the machining tools 8 in accordance with a machining program so as to manufacture a plurality of desired products. The machining program is "NC data" or "NC program". As used herein, the term "machining program" refers to a program storing a plurality of machining processes that define, using coordinate values, operations of the grasper 32 (see FIG. 5) of the workpiece conveyor 30, operations of the spindle 63 (see FIG. 7) of the cutting apparatus 60, and operations of the clamp 66 (see FIG. 9) that retains the workpiece 5. In short, the machining program includes a plurality of machining processes. In accordance with the machining processes, the controller 110 controls the operations of the grasper 32 of the workpiece conveyor 30, the operations of the spindle 63 of the cutting apparatus 60, and the operations of the clamp 66. Thus, the cutting system 100 cuts the workpieces 5 with the machining tools 8 while changing the target to be cut from one workpiece 5 to another. Consequently, the cutting system 100 manufactures a plurality of desired products.

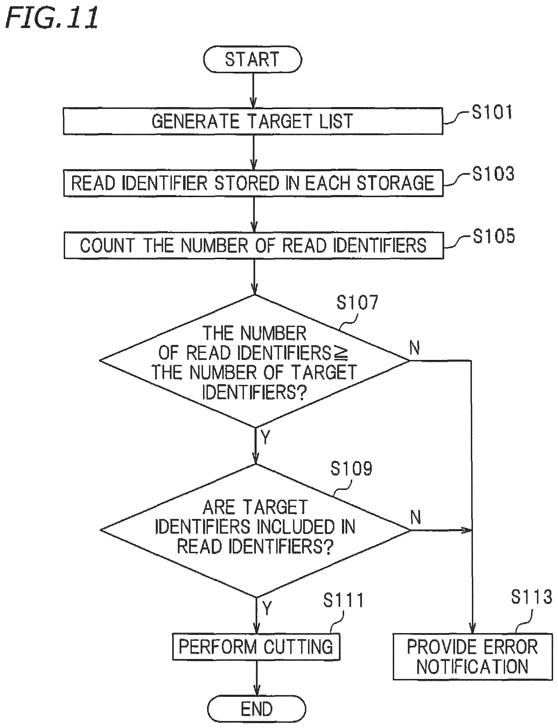

FIG. 11 is a flow chart illustrating a procedure for determining whether the workpiece 5 to be cut in accordance with the machining program is contained in the workpiece container 10. Referring to the flow chart of FIG. 11, the following description discusses the procedure for determining, before the workpiece 5 is cut by executing the machining program, whether the workpiece 5 to be cut in accordance with the machining program is contained in the workpiece container 10. In the present embodiment, the storage processor 112 stores in advance the machining program to be used for cutting.

In step S101 of FIG. 11, the list generation processor 114 generates a target list. As used herein, the term "target list" refers to a list of target identifiers that are identifiers designated by the machining program to be executed. In the present embodiment, the machining processes of the machining program include a replacement command. As used herein, the term "replacement command" refers to a command to replace the workpiece 5 to be cut by the cutting apparatus 60. The workpiece 5 to be cut by the cutting apparatus 60 may hereinafter be referred to as a "target workpiece". The replacement command is a command that designates the identifier associated with the target workpiece. Executing the replacement command replaces the workpiece 5 retained by the clamp 66 of the cutting apparatus 60 with the workpiece 5 having the identifier designated by the replacement command.

In step S101, the list generation processor 114 first extracts the replacement command from the machining program that is stored in the storage processor 112 and is to be executed. The list generation processor 114 then extracts the target identifiers designated by the replacement command extracted by the list generation processor 114. The list generation processor 114 subsequently generates a target list that is a list of the target identifiers extracted by the list generation processor 114. In addition to generating the target list, the list generation processor 114 according to the present embodiment counts the number of target identifiers extracted by the list generation processor 114. The target list generated by the list generation processor 114 and the number of target identifiers counted by the list generation processor 114 are stored in the storage processor 112.

In step S103 of FIG. 11, the reading processor 116 exercises control to cause the reader 58 to read the identifier stored in the storage 3 of each of the workpieces 5 held in the holder 13. In the present embodiment, the reading processor 116 controls the first conveying mechanism 37 in order to allow the reader 58 to read the identifiers stored in the storages 3 of the workpieces 5 held in all of the sub-holders 22 of the workpiece container 10. Specifically, with the first conveyance body 31a (see FIG. 5) contained in the second conveyance body 31b, the reading processor 116 controls the first drive motor 37b so as to move the conveyance body 31 along the first rails 37a as illustrated in FIG. 4. During passage of the reader 58 of the conveyance body 31 through a region adjacent to the sub-holders 22 (or more specifically, a region leftward of the sub-holders 22), the reader 58 reads the identifiers stored in the storages 3 of the workpieces 5 held in the sub-holders 22. The identifiers read by the reader 58 may hereinafter be referred to as "read identifiers". The read identifiers are stored in the storage processor 112.

In step S105 of FIG. 11, the counting processor 118 counts the number of read identifiers read by the reading processor 116. The number of read identifiers counted by the counting processor 118 is stored in the storage processor 112. In step S107 of FIG. 11, the count determination processor 120 determines whether the number of read identifiers counted by the counting processor 118 is equal to or larger than the number of target identifiers counted in step S101. When the number of read identifiers counted by the counting processor 118 is equal to or larger than the number of target identifiers, the procedure goes to step S109. When the number of read identifiers counted by the counting processor 118 is smaller than the number of target identifiers, at least one or more of the target identifiers in the target list are not included in the identifiers of the workpieces 5 held in the sub-holders 22 of the holder 13. In this case, the procedure goes to step S113.

When the number of read identifiers is determined to be equal to or larger than the number of target identifiers in step S107, the identifier determination processor 122 determines, in step S109 of FIG. 11, whether the target identifiers in the target list stored in the storage processor 112 are included in the read identifiers. In the present embodiment, the machining program is executed when all of the target identifiers are included in the read identifiers. Thus, upon determination by the identifier determination processor 122 that all of the target identifiers in the target list are included in the read identifiers, the procedure goes to step S111. When at least one of the target identifiers in the target list is not included in the read identifiers, the identifier determination processor 122 determines that the workpiece 5 associated with the target identifier not included in the read identifiers is not held in the sub-holder 22. In this case, the procedure goes to step S113.

In the present embodiment, a list of the read identifiers read by the reading processor 116 may be stored in the storage processor 112 during execution of the machining program in the preceding round. The list of read identifiers read in the preceding round will hereinafter be referred to as a "preliminary list". The preliminary list is changed in response to the state of the sensor 22a (see FIG. 4) of each sub-holder 22. In one example, when the workpiece 5 is removed from the sub-holder 22 by the user, for example, and the sensor 22a of the sub-holder 22 is turned OFF, the identifier associated with the workpiece 5 once held in the sub-holder 22 whose sensor 22a is turned OFF is deleted from the preliminary list.

When the preliminary list described above is stored in the storage processor 112, the identifier determination processor 122 may determine whether the target identifiers are included in the read identifiers in a manner described below. The identifier determination processor 122 first extracts differential identifiers. As used herein, the term "differential identifier" refers to an identifier that is included in the read identifiers but not included in the preliminary list. The identifier determination processor 122 then determines whether the target identifiers in the target list are included in the differential identifiers. When all of the target identifiers are included in the differential identifiers, the identifier determination processor 122 determines that all of the target identifiers are included in the read identifiers. In this case, the procedure goes to step S111. When at least one of the target identifiers is not included in the differential identifiers, the identifier determination processor 122 determines that at least one of the target identifiers is not included in the read identifiers. In this case, the procedure goes to step S113.

Upon determination by the identifier determination processor 122 in step S109 that all of the target identifiers in the target list are included in the read identifiers, the cutting control processor 124 performs cutting in accordance with the machining program in step S111 of FIG. 11. In the present embodiment, the cutting control processor 124 controls the workpiece conveyor 30 and the cutting apparatus 60 so as to cut the workpiece 5 provided with the storage 3 storing the identifier identical to the associated target identifier.

The processes of the machining program include a process for executing the replacement command. This process will hereinafter be referred to as a "replacement command execution process". In the replacement command execution process, the cutting control processor 124 first exercises control to cause the grasper 32 (see FIG. 5) of the workpiece conveyor 30 to grasp the workpiece 5 retained by the clamp 66 (see FIG. 9). The cutting control processor 124 then controls the first conveying mechanism 37 and the second conveying mechanism 38 such that the workpiece 5 grasped by the grasper 32 is held in the sub-holder 22 that has previously held the workpiece 5. After the workpiece 5 grasped by the grasper 32 is held in the sub-holder 22, the cutting control processor 124 exercises control to cause the grasper 32 to grasp the workpiece 5 associated with the identifier designated by the replacement command. The cutting control processor 124 subsequently controls the first conveying mechanism 37 and the second conveying mechanism 38 such that the workpiece 5 associated with the identifier designated by the replacement command is conveyed to the cutting apparatus 60. After the workpiece 5 is conveyed to the cutting apparatus 60, the workpiece 5 is retained by the clamp 66. The replacement command execution process is carried out in this manner. Controlling the operations of the spindle 63 (see FIG. 7) and the clamp 66 of the cutting apparatus 60 in accordance with the subsequent process of the machining program makes it possible to cut the workpiece 5 retained by the clamp 66.

Upon determination in step S107 that the number of read identifiers is smaller than the number of target identifiers or upon determination in step S109 that at least one of the target identifiers is not included in the read identifiers, the procedure goes to step S113 of FIG. 11. In step S113, the error notification processor 126 provides an error notification. In the present embodiment, the error notification processor 126 presents an error message on the display screen 105 (see FIG. 10). Specific information indicated by the error message is not limited to any particular information. In one example, the error notification processor 126 may present, on the display screen 105, an error message indicative of the target identifier(s) in the target list that is/are not read by the reader 58. The error notification processor 126 may provide an error notification in any other specific way. In another example, the error notification processor 126 may provide an error notification by making a sound or emitting light using an LED, for example.

The present embodiment involves determining, prior to execution of the machining program, whether the target workpiece 5 to be cut in accordance with the machining program is held in the holder 13. Suppose that a machining program is executed although a workpiece having an identifier identical to an associated target identifier designated by the machining program to be executed is not held in a holder. In such a case, a cutting apparatus will recognize in the course of cutting that the target workpiece is not held in the holder, so that cutting performed by the cutting apparatus will be interrupted in progress. In the present embodiment, however, the error notification processor 126 provides, before the machining program is executed, an error notification when the workpiece having the identifier identical to the associated target identifier designated by the machining program to be executed is not held in the holder 13. Thus, the cutting apparatus 60 does not start cutting the workpieces 5 in this case. This prevents interruption of in-progress cutting resulting from the situation where the target workpiece 5 is not held in the holder 13. Consequently, the cutting system 100 according to the present embodiment suitably performs cutting in accordance with the machining program.

In the present embodiment, the list generation processor 114 generates the target list by extracting the replacement command from the machining program stored in the storage processor 112 and extracting the identifiers designated by the replacement command extracted. Generating the target list using the replacement command of the machining program in this manner makes it possible to extract the necessary identifiers of the workpieces 5 to be cut by execution of the machining program. Thus, the target list is generated with higher accuracy.

In the present embodiment, the counting processor 118 counts the number of read identifiers read by the reading processor 116. The count determination processor 120 determines whether the number of read identifiers counted by the counting processor 118 is equal to or larger than the number of target identifiers. Upon determination by the count determination processor 120 that the number of read identifiers is smaller than the number of target identifiers, the error notification processor 126 provides an error notification. Thus, when the number of read identifiers is smaller than the number of target identifiers, the user notices that the workpiece 5 associated with the target identifier not included in the read identifiers is not held in the sub-holder 22. Accordingly, the simple process involving determining the number of read identifiers enables the user to notice that the workpiece 5 having the identifier identical to the associated target identifier designated by the machining program to be executed is not held in the sub-holder 22. This results in a reduction in the time required for the determination made by the count determination processor 120.

In the present embodiment, the identifier determination processor 122 extracts the differential identifiers that are included in the read identifiers read by the reading processor 116 but not included in the preliminary list, and determines whether the target identifiers are included in the differential identifiers. Upon determination by the identifier determination processor 122 that at least one of the target identifiers is not included in the differential identifiers, the error notification processor 126 provides an error notification. Thus, when the identifier determination processor 122 makes the determination, the identifier determination processor 122 is only required to determine whether the target identifiers are included in the differential identifiers. The number of differential identifiers is equal to or smaller than the number of read identifiers. This results in a reduction in the time required for the determination made by the identifier determination processor 122.

In the present embodiment, the error notification processor 126 presents an error message on the display screen 105 upon determination by the identifier determination processor 122 that at least one of the target identifiers is not included in the read identifiers read by the reading processor 116. Thus, the user is easily notified of the fact that the workpiece 5 having the identifier identical to the associated target identifier designated by the machining program to be executed is not held in the sub-holder 22.

As illustrated in FIG. 4, the reading processor 116 according to the present embodiment causes the first conveying mechanism 37 to convey the conveyance body 31 in the up-down direction, so that the reader 58 reads the identifiers of the workpieces 5 held in the sub-holders 22. Specifically, the reading processor 116 controls the first drive motor 37b so as to convey the conveyance body 31 in the up-down direction along the first rails 37a, so that the reader 58 reads the identifiers of the workpieces 5 held in the sub-holders 22. The simple process involving moving the conveyance body 31 in the up-down direction in this manner enables the reader 58 to read the identifiers of the workpieces 5 held in the sub-holders 22. The first conveying mechanism 37 is also used to convey the workpiece 5 held in the sub-holder 22 to the cutting apparatus 60. Thus, the present embodiment eliminates the need for providing an additional conveying mechanism to enable the reader 58 to read the identifiers of the workpieces 5 held in the sub-holders 22. This results in a reduction in the number of components.

In the present embodiment, each storage 3 (see FIG. 2) stores any one of a bar code, a two-dimensional code, and an IC tag. This allows the reader 58 to easily read the identifiers stored in the storages 3.

As illustrated in FIG. 4, the present embodiment involves disposing the sub-holders 22 of the holder 13 one above another in the up-down direction. Thus, the workpiece container 10 does not increase in size in the front-rear direction or the right-left direction.

In the present embodiment, the target list is generated by the list generation processor 114. The target list, however, does not necessarily have to be generated by the list generation processor 114. The target list may be stored in the storage processor 112 in advance. In this case, step S101 of FIG. 11 may be omitted.

The present embodiment involves counting the number of read identifiers in step S105 of FIG. 11. The present embodiment then involves determining whether the number of read identifiers is equal to or larger than the number of target identifiers in step S107. Alternatively, steps S105 and S107 may be omitted.

The processors of the controller 110 (i.e., the storage processor 112, the list generation processor 114, the reading processor 116, the counting processor 118, the count determination processor 120, the identifier determination processor 122, the cutting control processor 124, and the error notification processor 126) may be implemented by software. Specifically, a computer program may be read into a computer so as to implement the functions of the processors of the controller 110 by the computer. The present invention includes a computer program to allow a computer to function as the processors. The present invention further includes a non-transitory computer-readable storage medium storing the computer program. Each of the processors of the controller 110 may be provided by a single processor or a plurality of processors. The present invention further includes a circuit having the functions similar to those of a program to be executed by each of the processors of the controller 110.

## Claims

1. A cutting system comprising:
a workpiece container (10) including a holder (13) configured to hold a plurality of workpieces (5);
a cutting apparatus (60) configured to cut the workpieces (5) in accordance with a machining program;
a workpiece conveyor (30) configured to convey one of the plurality of workpieces (5) held in the holder (13) to the cutting apparatus (60); and
a controller (110) configured or programmed to control the cutting apparatus (60) and the workpiece conveyor (10), wherein
each of the workpieces (5) is provided with a storage (3) storing an identifier that identifies the workpiece (5),
the workpiece conveyor (30) includes a reader (58) configured to read the identifiers stored in the storages (3), and
the controller (110) includes
a storage processor (112) storing the machining program and a target list, the target list being a list of target identifiers that are identifiers designated by the machining program to be executed,
a reading processor (116) configured to cause the reader (58) to read, before the workpieces (5) are cut by the cutting apparatus (60), the identifier stored in the storage (3) of each of the workpieces (5) held in the holder (13),
an identifier determination processor (122) configured to determine whether the target identifiers in the target list are included in the identifiers read by the reading processor (58),
a cutting control processor (124) configured to, upon determination by the identifier determination processor (122) that the target identifiers in the target list are included in the identifiers read by the reading processor (116), control the workpiece conveyor (30) and the cutting apparatus (60) so as to cut the workpiece (5) provided with the storage (3) storing the identifier identical to an associated one of the target identifiers, and
an error notification processor (126) configured to provide an error notification upon determination by the identifier determination processor (122) that at least one of the target identifiers in the target list is not included in the identifiers read by the reading processor (116).

2. The cutting system according to claim 1, wherein
the machining program includes a replacement command to replace a target workpiece, the target workpiece being the workpiece (5) to be cut by the cutting apparatus (60), the replacement command designating the identifier associated with the target workpiece, and
the controller (110) further includes a fist generation processor (114) configured to generate the target list by extracting the replacement command from the machining program and extracting the identifiers designated by the replacement command extracted.

3. The cutting system according to claim 1 or 2, wherein
the storage processor (112) stores the number of target identifiers included in the target list,
the controller (110) further includes
a counting processor (118) configured to count the number of identifiers read by the reading processor (116), and
a count determination processor (120) configured to determine whether the number of identifiers counted by the counting processor (118) is equal to or larger than the number of target identifiers, and
the error notification processor (126) provides an error notification upon determination by the count determination processor (120) that the number of identifiers counted by the counting processor (118) is smaller than the number of target identifiers.

4. The cutting system according to any one of claims 1 to 3, wherein
the storage processor (112) stores a preliminary list that is a list of the identifiers read by the reading processor (116) in a preceding round,
the identifier determination processor (122) extracts differential identifiers that are included in the identifiers read by the reading processor (116) but not included in the preliminary list, and determines whether the target identifiers in the target list are included in the differential identifiers, and
the error notification processor (126) provides an error notification upon determination by the identifier determination processor (122) that at least one of the target identifiers in the target list is not included in the differential identifiers.

5. The cutting system according to any one of claims 1 to 4, wherein
the storages (3) each store any one of a bar code, a two-dimensional code, and an IC tag.

6. The cutting system according to claim 1, further comprising a display screen (105), wherein
the error notification processor (126) is configured to present an error message on the display screen (105) upon determination by the identifier determination processor (122) that at least one of the target identifiers in the target list is not included in the identifiers read by the reading processor (116).

7. The cutting system according to any one of claims 1 to 6, wherein
the holder (13) includes a plurality of sub-holders (22) configured to hold the workpieces (5), the sub-holders (22) being arranged in a first direction,
the workpiece conveyor (30) includes
a conveyance body (31),
a grasper (32) disposed on the conveyance body (31), the grasper (32) being configured to grasp the workpiece (5) held in the associated sub-holder (22), and
a conveying mechanism (37) configured to move the conveyance body (31) in the first direction such that the conveyance body (31) faces the holder (13), and
the reader (58) is disposed on the conveyance body (31).

8. The cutting system according to claim 7, wherein
the reading processor (116) is configured to cause the conveying mechanism (37) to convey the conveyance body (31) in the first direction so as to cause the reader (58) to read the identifiers of the workpieces (5) held in the sub-holders (22) of the holder (13).

9. The cutting system according to claim 7 or 8, wherein
the conveying mechanism (37) includes
a rail (37a) extending in the first direction such that the rail (37a) faces the holder (13), the conveyance body (31) being slidable along the rail (37a), and
a drive motor (37b) connected to the conveyance body (31), the drive motor (37b) being configured to move the conveyance body (31) along the rail (37a).

10. The cutting system according to any one of claims 7 to 9, wherein
the first direction is an up-down direction.

## Patentansprüche

1. Schneidsystem, das umfasst:
einen Werkstückbehälter (10) mit einem Halter (13), der konfiguriert ist, um eine Vielzahl von Werkstücken (5) zu halten;
eine Schneidvorrichtung (60), die konfiguriert ist, um die Werkstücke (5) in Übereinstimmung mit einem Bearbeitungsprogramm zu schneiden:
eine Werkstückfördereinrichtung (30), die konfiguriert ist, um eines aus der Vielzahl von in dem Halter (13) gehaltenen Werkstücken (5) zu der Schneidvorrichtung (60) zu befördern; und
eine Steuerung (110), die konfiguriert oder programmiert ist, um die Schneidvorrichtung (60) und die Werkstückfördereinrichtung (10) zu steuern, wobei
jedes der Werkstücke (5) mit einem Speicher (3) bereitgestellt wird, der eine Kennung speichert, die das Werkstück (5) identifiziert,
die Werkstückfördereinrichtung (30) eine Leseeinrichtung (58) aufweist, die konfiguriert ist, um die in den Speichern (3) gespeicherten Kennungen zu lesen, und
die Steuerung (110) aufweist:
einen Speicherprozessor (112), der das Bearbeitungsprogramm und eine Zielliste speichert, wobei die Zielliste eine Liste von Zielkennungen ist, die durch das auszuführende Bearbeitungsprogramm bezeichnete Kennungen sind,
einen Leseprozessor (116), der konfiguriert ist, um die Leseeinrichtung (58) lesen zu lassen, bevor die Werkstücke (5) von der Schneidvorrichtung (60) geschnitten werden, wobei die Kennung im Speicher (3) von jedem der in der Halterung (13) gehaltenen Werkstücke (5) gespeichert ist,
einen Kennungsbestimmungsprozessor (122), der konfiguriert ist, um zu bestimmen, ob die Zielkennungen in der Zielliste in den vom Leseprozessor (58) gelesenen Kennungen enthalten sind,
einen Schneidsteuerungsprozessor (124), der konfiguriert ist, um beim Bestimmen durch den Kennungsbestimmungsprozessor (122), dass die Zielkennungen in der Zielliste in den vom Leseprozessor (116) gelesenen Kennungen enthalten sind, die Werkstückfördereinrichtung (30) und die Schneidvorrichtung (60) so zu steuern, dass das Werkstück (5) geschnitten wird, das mit dem Speicher (3) bereitgestellt wird, der die Kennung speichert, die mit einer zugeordneten der Zielkennungen identisch ist, und
einen Fehlermeldeprozessor (126), der konfiguriert ist, um eine Fehlermeldung beim Bestimmen durch den Kennungsbestimmungsprozessor (122) bereitzustellen, dass wenigstens eine der Zielkennungen in der Zielliste nicht in den vom Leseprozessor (116) gelesenen Kennungen enthalten ist.

2. Schneidsystem nach Anspruch 1, wobei
das Bearbeitungsprogramm einen Austauschbefehl zum Austauschen eines Zielwerkstücks aufweist, wobei das Zielwerkstück das von der Schneidvorrichtung (60) zu schneidende Werkstück (5) ist, wobei der Austauschbefehl die dem Zielwerkstück zugeordnete Kennung bezeichnet, und
die Steuerung (110) des Weiteren einen Listenerzeugungsprozessor (114) aufweist, der konfiguriert ist, um die Zielliste durch Extrahieren des Austauschbefehls aus dem Bearbeitungsprogramm und Extrahieren der durch den extrahierten Austauschbefehl bezeichneten Kennungen zu erzeugen.

3. Schneidsystem nach Anspruch 1 oder 2, wobei
der Speicherprozessor (112) die Anzahl der in der Zielliste enthaltenen Zielkennungen speichert,
die Steuerung (110) des Weiteren
einen Zählprozessor (118), der konfiguriert ist, um die Anzahl der von dem Leseprozessor (116) gelesenen Kennungen zu zählen, und
einen Zählbestimmungsprozessor (120) aufweist, der konfiguriert ist, um zu bestimmen, ob die Anzahl der von dem Zählprozessor (118) gezählten Kennungen gleich oder größer ist als die Anzahl der Zielkennungen, und
der Fehlermeldeprozessor (126) eine Fehlermeldung beim Bestimmen durch den Zählbestimmungsprozessor (120) bereitstellt, dass die Anzahl der vom Zählprozessor (118) gezählten Kennungen kleiner ist als die Anzahl der Zielkennungen.

4. Schneidsystem nach einem der Ansprüche 1 bis 3, wobei
der Speicherprozessor (112) eine vorläufige Liste speichert, die eine Liste der Kennungen ist, die von dem Leseprozessor (116) in einer vorangegangenen Runde gelesen wurden,
der Kennungsbestimmungsprozessor (122) unterschiedliche Kennungen extrahiert, die in den vom Leseprozessor (116) gelesenen Kennungen, aber nicht in der vorläufigen Liste enthalten sind, und bestimmt, ob die Zielkennungen in der Zielliste in den unterschiedlichen Kennungen enthalten sind, und
der Fehlermeldeprozessor (126) eine Fehlermeldung beim Bestimmen durch den Kennungsbestimmungsprozessor (122) bereitstellt, dass wenigstens eine der Zielkennungen in der Zielliste nicht in den unterschiedlichen Kennungen enthalten ist.

5. Schneidsystem nach einem der Ansprüche 1 bis 4, wobei
die Speicher (3) jeweils einen Barcode, einen zweidimensionalen Code oder ein IC-Etikett speichern.

6. Schneidsystem nach Anspruch 1, das des Weiteren einen Anzeigebildschirm (105) umfasst, wobei
der Fehlermeldeprozessor (126) konfiguriert ist, um eine Fehlermeldung auf dem Anzeigebildschirm (105) beim Bestimmen des Kennungsbestimmungsprozessors (122) zu präsentieren, dass wenigstens eine der Zielkennungen in der Zielliste nicht in den vom Leseprozessor (116) gelesenen Kennungen enthalten ist.

7. Schneidsystem nach einem der Ansprüche 1 bis 6, wobei
der Halter (13) eine Vielzahl von Unterhaltern (22) aufweist, die konfiguriert sind, um die Werkstücke (5) zu halten, wobei die Unterhalter (22) in einer ersten Richtung angeordnet sind,
die Werkstückfördereinrichtung (30)
einen Beförderungskörper (31),
einen Greifer (32), der auf dem Beförderungskörper (31) angeordnet ist, wobei der Greifer (32) konfiguriert ist, um das in dem zugeordneten Unterhalter (22) gehaltene Werkstück (5) zu greifen, und
einen Beförderungsmechanismus (37) aufweist, der konfiguriert ist, um den Beförderungskörper (31) in die erste Richtung zu bewegen, so dass der Beförderungskörper (31) dem Halter (13) zugewandt ist, und
die Leseeinrichtung (58) an dem Beförderungskörper (31) angeordnet ist.

8. Schneidsystem nach Anspruch 7, wobei
der Leseprozessor (116) konfiguriert ist, um den Beförderungsmechanismus (37) den Beförderungskörper (31) in die erste Richtung bewegen zu lassen, so dass die Leseeinrichtung (58) die Kennungen der in den Unterhaltern (22) des Halters (13) gehaltenen Werkstücke (5) liest.

9. Schneidsystem nach Anspruch 7 oder 8, wobei
der Fördermechanismus (37) aufweist
eine Schiene (37a), die sich in die erste Richtung erstreckt, so dass die Schiene (37a) dem Halter (13) zugewandt ist, wobei der Beförderungskörper (31) entlang der Schiene (37a) verschiebbar ist, und
einen Antriebsmotor (37b), der mit dem Beförderungskörper (31) verbunden ist, wobei der Antriebsmotor (37b) konfiguriert ist, um den Beförderungskörper (31) entlang der Schiene (37a) zu bewegen.

10. Schneidsystem nach einem der Ansprüche 7 bis 9, wobei
die erste Richtung eine Auf- und Abrichtung ist.

## Revendications

1. Système de découpe comprenant :
un réservoir de pièces à usiner (10) incluant un support (13) configuré pour maintenir une pluralité de pièces à usiner (5),
un appareil de découpe (60) configuré pour découper les pièces à usiner (5) en fonction d'un programme d'usinage,
un convoyeur de pièces à usiner (30) configuré pour transporter vers l'appareil de découpe (60) l'une de la pluralité de pièces à usiner (5) maintenues dans le support (13), et
un contrôleur (110) configuré ou programmé pour piloter l'appareil de découpe (60) et le convoyeur de pièces à usiner (30), dans lequel
chacune des pièces à usiner (5) est dotée d'un dispositif de stockage (3) mémorisant un identificateur qui identifie la pièce à usiner (5),
le convoyeur de pièces à usiner (30) inclut un lecteur (58) configuré pour lire les identificateurs mémorisés dans les dispositifs de stockage (3), et
le contrôleur (110) inclut :
un processeur de stockage (112) mémorisant le programme d'usinage et une liste cible, la liste cible étant une liste d'identificateurs cibles qui sont des identificateurs désignés pour une exécution par le programme d'usinage,
un processeur de lecture (116) configuré pour amener le lecteur (58) à lire l'identificateur stocké dans le dispositif de stockage (3) de chacune des pièces à usiner (5) maintenues dans le support (13), avant que les pièces à usiner (5) soient découpées par l'appareil de découpe (60),
un processeur de détermination d'identificateurs (122) configuré pour déterminer si les identificateurs cibles dans la liste cible sont inclus dans les identificateurs lus par le processeur de lecture (58),
un processeur de commande de découpe (124) configuré pour piloter le convoyeur de pièces à usiner (30) et l'appareil de découpe (60) lors de la détermination opérée par le processeur de détermination d'identificateurs (122) que les identificateurs cibles dans la liste cible sont inclus dans les identificateurs lus par le processeur de lecture (116), de sorte à découper la pièce à usiner (5) dotée du dispositif de stockage (3) mémorisant l'identificateur qui est identique à l'un, associé, des identificateurs cibles, et
un processeur de signalisation d'erreur (126) configuré pour fournir une signalisation d'erreur lors de la détermination par le processeur de détermination d'identificateurs (122) de ce qu'au moins l'un des identificateurs cibles dans la liste cible n'est pas inclus dans les identificateurs lus par le processeur de lecture (116) .

2. Système de découpe selon la revendication 1, dans lequel :
le programme d'usinage inclut une commande de remplacement destinée à remplacer une pièce à usiner cible, la pièce à usiner cible étant la pièce à usiner (5) devant être découpée par l'appareil de découpe (60), la commande de remplacement désignant l'identificateur associé à la pièce à usiner cible, et
le contrôleur (110) inclut en outre un processeur de génération de liste (114) configuré pour générer la liste cible en extrayant la commande de remplacement du programme d'usinage et en extrayant les identificateurs désignés par la commande de remplacement extraite.

3. Système de découpe selon la revendication 1 ou la revendication 2, dans lequel :
le processeur de stockage (112) stocke le nombre d'identificateurs cible inclus dans la liste cible,
le contrôleur (110) inclut en outre :
un processeur de comptage (118) configuré pour compter le nombre d'identificateurs lus par le processeur de lecture (116), et
un processeur de détermination de comptage (120) configuré pour déterminer si le nombre d'identificateurs comptés par le processeur de comptage (118) est supérieur ou égal au nombre d'identificateurs cibles, et
le processeur de signalisation d'erreur (126) procure une signalisation d'erreur à la détermination, opérée par le processeur de détermination de comptage (120), de ce que le nombre d'identificateurs comptés par le processeur de comptage (118) est inférieur au nombre d'identificateurs cibles.

4. Système de découpe selon l'une quelconque des revendications 1 à 3, dans lequel :
le processeur de stockage (112) mémorise une liste préliminaire qui est la liste des identificateurs lus par le processeur de lecture (116) dans une passe précédente,
le processeur de détermination d'identificateurs (122) extrait des identificateurs différentiels qui sont inclus dans les identificateurs lus par le processeur de lecture (116) mais ne sont pas inclus dans la liste préliminaire, et il détermine si les identificateurs cibles dans la liste cible sont inclus dans les identificateurs différentiels, et
le processeur de signalisation d'erreur (126) procure une signalisation d'erreur à la détermination, opérée par le processeur de détermination d'identificateurs (122), de ce qu'au moins l'un des identificateurs cibles dans la liste cible n'est pas inclus dans les identificateurs différentiels.

5. Système de découpe selon l'une quelconque des revendications 1 à 4, dans lequel :
les dispositifs de stockage (3) stockent chacun l'un quelconque d'un code à barres, d'un code bidimensionnel et d'une étiquette CI (à circuit intégré).

6. Système de découpe selon la revendication 1, comprenant en outre un écran d'affichage (105) dans lequel :
le processeur de signalisation d'erreur (126) est configuré pour présenter un message d'erreur sur l'écran d'affichage (105) à la détermination, opérée par le processeur de détermination d'identificateurs (122), de ce qu'au moins l'un des identificateurs cibles dans la liste cible n'est pas inclus dans les identificateurs lus par le processeur de lecture (116).

7. Système de découpe selon l'une quelconque des revendications 1 à 6, dans lequel :
le support (13) inclut une pluralité de supports auxiliaires (22) configurés pour maintenir les pièces à usiner (5), les supports auxiliaires (22) étant agencés dans une première direction,
le convoyeur de pièces à usiner (30) inclut :
un corps de transport (31),
un dispositif de préhension (32) disposé sur le corps de transport (31), le dispositif de préhension (32) étant configuré pour saisir la pièce à usiner (5) maintenue dans le support auxiliaire (22) associé, et
un mécanisme de transport (37) configuré pour déplacer le corps de transport (31) dans la première direction de sorte à ce que le corps de transport (31) fasse face au support (13), et
le lecteur (50) est disposé sur le corps de transport (31) .

8. Système de découpe selon la revendication 7, dans lequel :
le processeur de lecture (116) est configuré pour amener le mécanisme de transport (37) à transporter le corps de transport (31) dans la première direction de sorte à amener le lecteur (58) à lire les identificateurs des pièces à usiner (5) maintenues dans les supports auxiliaires (22) du support (13).

9. Système de découpe selon la revendication 7 ou la revendication 8, dans lequel :
le mécanisme de transport (37) inclut :
un rail (37a) s'étendant dans la première direction de sorte à ce que le rail (37a) soit en face du support (13), le corps de transport (31) pouvant coulisser le long du rail (37a), et
un moteur d'entraînement (37b) relié au corps de transport (31), le moteur d'entraînement (37b) étant configuré pour déplacer le corps de transport (31) le long du rail (37a).

10. Système de découpe selon l'une quelconque des revendications 7 à 9, dans lequel :
la première direction est la direction haut - bas.
